(19) Europäisches Patentamt
European Patent Office
Office européen des brevets

(11) **EP 3 362 675 B1**

(12) **EUROPEAN PATENT SPECIFICATION**

(45) Date of publication and mention
of the grant of the patent:
**14.08.2019 Bulletin 2019/33**

(51) Int Cl.:
**F03B 3/06** (2006.01)     **F03B 15/00** (2006.01)

(21) Application number: **16820323.0**

(22) Date of filing: **14.10.2016**

(86) International application number:
**PCT/IB2016/056175**

(87) International publication number:
**WO 2017/064666 (20.04.2017 Gazette 2017/16)**

(54) **A METHOD FOR AUTOMATICALLY EVALUATING ON LINE THE EFFICIENCY OF A KAPLAN TURBINE**

VERFAHREN ZUR AUTOMATISCHEN BEWERTUNG DER EFFIZIENZ EINER KAPLANTURBINE

PROCÉDÉ D'ÉVALUATION AUTOMATIQUE EN LIGNE DE L'EFFICACITÉ D'UNE TURBINE KAPLAN

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.10.2015 IT UB20155292**

(43) Date of publication of application:
**22.08.2018 Bulletin 2018/34**

(73) Proprietor: **Enel Produzione S.p.A.
00198 Roma (IT)**

(72) Inventors:
• **SUFFREDINI, Roberto
55036 Pieve Fosciana (Lucca) (IT)**
• **MASOTTI, Matteo
40124 Bologna (IT)**
• **QUADRELLI, Alessandro
55041 Camaiore (Lucca) (IT)**
• **SELLO, Stefano
56123 Pisa (IT)**

(74) Representative: **Brazzini, Silvia et al
Società Italiana Brevetti S.p.A.
Corso dei Tintori, 25
50122 Firenze (IT)**

(56) References cited:
**US-A- 4 794 544**

• **ATTA KHALID TOURKEY ET AL: "Phasor
extremum seeking and its application in Kaplan
turbine control", 2014 IEEE CONFERENCE ON
CONTROL APPLICATIONS (CCA), IEEE, 8
October 2014 (2014-10-08), pages 298-303,
XP032701213, DOI: 10.1109/CCA.2014.6981362**
• **FOREMAN C ET AL: "Coordinated Optimization
at a Hydro-Generating Plant by Software Agents",
IEEE TRANSACTIONS ON CONTROL SYSTEMS
TECHNOLOGY, IEEE SERVICE CENTER, NEW
YORK, NY, US, vol. 17, no. 1, 1 January 2009
(2009-01-01), pages 89-97, XP011227196, ISSN:
1063-6536, DOI: 10.1109/TCST.2008.922554**
• **ATTA KHALID TOURKEY ET AL: "Maximum
power point tracking for micro hydro power
plants using extremum seeking control", 2015
IEEE CONFERENCE ON CONTROL
APPLICATIONS (CCA), IEEE, 21 September 2015
(2015-09-21), pages 1874-1879, XP032809884,
DOI: 10.1109/CCA.2015.7320883**

## Description

### Field of the invention

The present application describes a method and a system for automatically evaluating the efficiency of a hydraulic turbine of the Kaplan type, to be carried out on line, during the regular operation of the turbine, in order to optimize the performance thereof in all operating conditions.

### State of the art

Kaplan turbines are used in numerous hydroelectric power plants and are distinguishable from the other types of hydraulic propeller turbines in that they have blades, whose orientation can be changed as the flow rate of the water varies, so as to always keep the performance of the plant at the maximum. Constructively, this type of turbine comprises a volute-shaped duct that conveys the inlet water to supply a distributor; such a distributor applies a rotation on the flow of water with respect to an impeller equipped with blades that is thus hit by the water and put in motion.

The Kaplan turbine is generally equipped with a double adjustment, i.e. it is capable of adjusting, independently from each other, both the angle $\varphi$ of the blades of the impeller, as stated above, and also the opening angle $\alpha$ of the distributor, in order to adapt them to the instantaneous flow rate of the water so as to obtain the maximum performance of the plant at all times.

During the normal operation of a hydroelectric power plant with a Kaplan turbine the actuation of the turbine takes place through the opening angle $\alpha$ of the distributor, whereas a turbine regulator takes care of positioning the opening angle $\varphi$ of the blades of the impeller according to a fixed relationship that is defined as "conjugation curve" or CAM. Such a curve can be independent from the hydraulic operation jump of the turbine, in this case being defined as two-dimensional CAM or 2D CAM, or it can be linked to the value measured for the hydraulic jump, in which case it is defined as three-dimensional CAM or 3D CAM. In other words, in the first case for a certain opening angle of the distributor, the position of the blades of the impeller will depend only on the opening angle of the distributor, whereas in the second case it will also depend on the hydraulic jump, and therefore better matches what the real operating situation is.

For a given Kaplan turbine the relationships between opening of its distributor, orientation of the blades and hydraulic jump should be established thanks to tests carried out on the plant where the turbine is installed, so as to seek the relationships between these magnitudes corresponding to the maximum efficiency of the turbine, normally meaning maximum efficiency of the turbine and generator assembly. These are so-called "index tests", aimed at determining the trend of the efficiency curves, and seeking the maximum, as the geometry of the machine and the operating conditions, like hydraulic jump and flow rate of the flow of water, change.

In an ideal situation the producer of the Kaplan turbine should supply the initial 3D curve, obtained during simulations, which should then be optimised with index tests carried out in the real operating conditions; in reality, in a substantial amount of hydroelectric power plants currently operating and equipped with Kaplan turbines, the conjugation curve CAM is of the 2D type, independent from the hydraulic jump and of uncertain origin, and moreover index tests are not carried out during operation, so that it is not known whether the machine is working in optimal efficiency conditions. The almost totality of Kaplan turbines currently in operation also does not have a 3D conjugation curve, and this can have strong repercussions on the efficiency of the machine since the Kaplan turbines are installed in plants with low hydraulic jump, so that the percentages jump variations due to the different hydraulic operating conditions, can also be very high in percentage terms with respect to the nominal jump, with consequent substantial variations in the efficiency values. There is therefore a need to create such 3D CAM curves in operating conditions by means of index tests.

Carrying out the index tests with a manual procedure does, however, involve substantial costs, both in terms of resources used in carrying out the tests and in terms of loss of production due to the locking of the plant and its unavailability while the tests are being performed. It should be said that such unavailability of the plant or in any case it being placed in a limited operation test mode, can even last a long time, in cases of plants linked to bodies of water with seasonal variations where the waiting time to have the data relative to the entire excursion of the hydraulic jumps will be very long. Faced with such costs, plant managers often prefer to postpone or even not perform such off-line index tests, with the consequence of not being able to optimise the efficiency of the turbine in the real operating situation of the plant. However, in this way much higher gains in terms of electrical energy lost due to the non-optimal efficiency of the plant are lost. As far as the Applicant is aware, up to now no technical solutions have been proposed that allow on line index tests of Kaplan turbines to be carried out; the need to be able to perform them during the regular operation of the turbines, however, is therefore greatly felt in order to optimise the performance of the turbines and more generally the efficiency of the plants.

US 4794544 discloses a method and an apparatus for automatically carrying out index tests on Kaplan turbines.

Atta K.T. et al. in "Maximum power point tracking for micro hydro power plants using extremum seeking control" 2015 IEEE Conference on Control Applications (CCA), IEEE, 1874-1879, diclose the possibility of using tools for the optimisation online of the maximum power available in hydroelectric microplants.

## Summary of the invention

The present invention thus proposes to provide an improved method for automatically determining the optimal position of the opening angle of a distributor and the orientation angle of the blades of a Kaplan turbine in a hydroelectric power plant, to which position corresponds the maximum efficiency of said turbine.

The present invention also proposes to provide a method for reconstructing in a continuous manner an index numerical model of a Kaplan turbine in a hydroelectric power plant around its normal operating conditions by means of on line index tests in a time interval long enough to record the entire range of hydraulic jumps in operation.

The present invention also proposes to provide a system for carrying out the aforementioned methods.

The present invention is applicable to any Kaplan turbine in a hydroelectric power plant and, as explained in more detail hereinafter, can be made with relatively low costs and instrumentation equipped with intrinsic safety and adaptable to any type of pre-existing plant.

A main subject of the present invention is therefore to provide a method that allows to automatically carrying out on line index tests for a Kaplan turbine, without having to limit in any way the operation of the hydroelectric power plant where the turbine is.

This and other subjects are accomplished by the system and method for automatically determining the optimal position of the opening angle of a distributor and the orientation angle of the blades of a Kaplan turbine in a hydroelectric power plant according to the present invention, whose essential characteristics are defined by the independent claims attached hereto. Further important characteristics of the method according to the invention are defined in the dependent claims also attached hereto.

## Brief description of the drawings

The characteristics and advantages of the method for evaluating the efficiency of a Kaplan turbine in a hydroelectric power plant according to the invention will become clearer from the following description of embodiments thereof, given as a non-limiting example with reference to the attached drawings, in which:

- Figure 1 shows a section view of a typical Kaplan turbine in a hydroelectric power plant;
- Figure 2 shows a flow diagram of the method of construction of an index model of a Kaplan turbine according to the invention in an exemplary embodiment thereof;
- Figures 3 and 4 show index models of a Kaplan turbine achieved by the method of the invention.

## Detailed description of the invention

Thanks to the method of the invention, for every work condition set for a Kaplan turbine in a hydroelectric power plant from the outside through power (P) or flow rate (Q) of the water flow, and for every condition of hydraulic jump (H) present in the plant, a pair of values of the angles α and φ are identified, which are respectively the opening angle of the distributor and the opening angle of the blades of the impeller, to which corresponds the maximum efficiency of generation of electric energy.

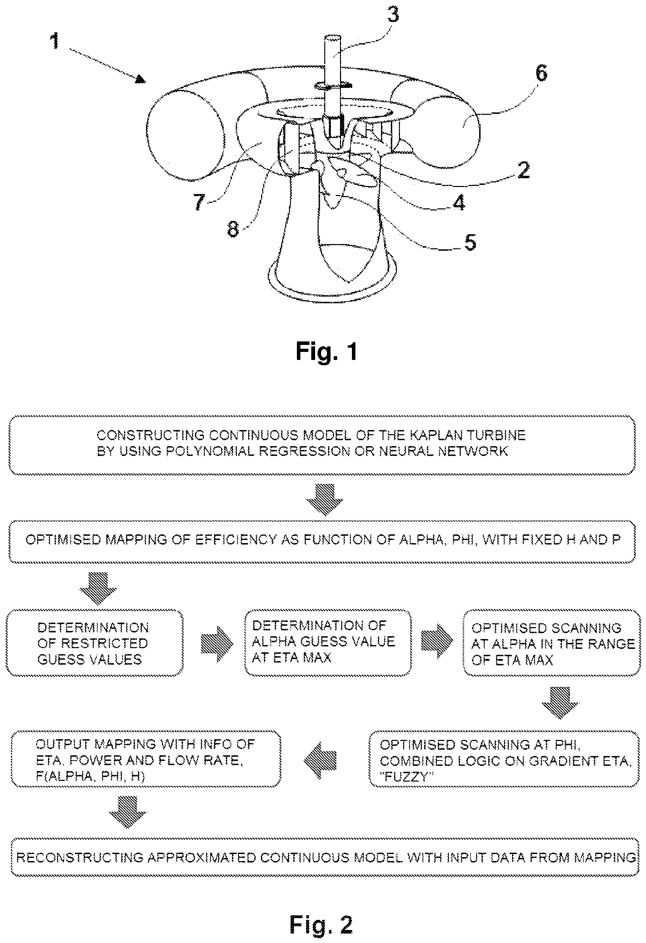

With particular reference to figure 1, the structure of a Kaplan turbine 1 is illustrated, in which are shown: an impeller 2 that rotates around an axis 3 and is equipped with adjustable blades 4 and ends towards the bottom with a nose cone 5, intended to contain all of the mechanisms that allow the adjustment of the blades; a structure with spiral volute 6 has the purpose of accelerating the water entering the turbine and of uniformly distributing it at the periphery of the turbine itself from which the water arrives at the distributor 7 also equipped with adjustable blades 8, so as to direct the stream of water entering the impeller with the correct angle.

The method proposed in this invention to optimise the efficiency of a turbine of this type, automatically determining the optimal opening position of the distributor α and of the orientation angle of the blades φ to which corresponds the maximum efficiency of the turbine, comprises the following steps:

i) monitoring the operation of the turbine by controlling the position of the opening angle of the distributor and the position of the orientation angle of the blades of the turbine by means of a special regulator according to a 2D CAM or 3D CAM conjugation curve of said turbine;

ii) measuring one of the operative parameters of the turbine and identifying when the turbine operates in steady-state conditions characterised by values of such an operative parameter within a pre-determined range for a pre-determined time;

iii) upon reaching such steady-state conditions, arbitrarily changing the position of the opening angle of the distributor keeping the position of said orientation angle of the blades fixed and measuring, for every value of the opening angle of the distributor, the values of the operative parameters of the turbine;

iv) calculating with an optimised automatic calculation procedure the index values of efficiency for every set of values measured in step iii) and identifying, for every set of values of the operative parameters of the turbine, the values of the opening angle of the distributor and of the opening angle of the blades to which corresponds the maximum value of efficiency.

The operative parameter of the turbine that can be measured to identify the steady state in step ii) of the present method can be the flow rate Q or the power P of the turbine, whereas the set of operative parameters of the turbine in step iv) can comprise for example flow rate, power and hydraulic jump, and preferably consists of such three parameters. The methods for measuring such entities can be many and depend on the configuration of the plant and on the instrumentation available; they are methods known to all those skilled in the art who can, in whatever circumstance, choose the measurement method that best suits the context of the plant and instrumentation. A detailed description of these methods can for example be found in the reference regulation CEI EN 60041.

In step iii) the variations carried out of the opening angle of the distributor are preferably such as to exclude in any case resulting index values of efficiency that are not significant, since they correspond to areas of turbulence and instability, as well as values potentially dangerous to the integrity of the mechanical components of the turbine, since they correspond to areas with phenomena of cavitation or strong vibrations. Based on such variations, for every value taken up by the opening angle of the distributor, the values of the operative parameters of the turbine are then measured thanks to a sampling algorithm that, once a predetermined number of sampled values has been reached, triggers the subsequent automatic calculation step.

According to the invention the optimised automatic calculation procedure in step iv) can for example be a method of multivariable polynomial regression of the second or third order, or a function approximation method based on the use of specifically designed neural networks, put into place thanks to a suitable computerised system, also subject of this invention.

The system of the invention comprises in particular means for processing data to automatically calculate the index values of efficiency per set of values of the operative parameters of the turbine and for identifying, for every set of these values, the values of the opening angle of the distributor and of the opening angle of the blades to which corresponds the maximum value of efficiency; and means for storing the pre-determined data of the turbine and of the data measured and calculated in the method of the invention described above. More specifically, in step iv) the index values of efficiency are calculated for each set of values measured in step iii), by an optimised automatic calculation procedure a continuous numeric model is constructed for said Kaplan turbine and, for each set of values of the operative parameters of the turbine, are identified the values of said opening angles of the distributor and of orientation of the blades to which corresponds the maximum value of efficiency. The evaluation of the above said efficiency values to be excluded is made based on a predetermined difference with respect to the operational efficiency values of the preset conjugation, while the exclusion of operating areas under mechanical risk because of vibrations or cavitation can be activated by means of the continuous monitoring of vibrations on the bearings of the generator.

With the method of the invention it is thus possible to determine for every work condition of a Kaplan turbine in a hydroelectric power plant that is set from the outside through the power P or the flow rate Q, and for every condition of hydraulic jump H present in that plant, a pair of values of the angles $\alpha$ and $\varphi$, which are respectively the opening angle of the distributor and the opening angle of the blades of the impeller, for which the maximum efficiency $\eta$ of generation of electrical energy is obtained, calculated through the following relationship:

$$\eta = k \cdot P/(Q\,H)$$

in which:

    k is a constant that depends on the force of gravity and on the density of the water, a function of the temperature and the operating pressure,
    P is the power,
    Q is the flow rate, and
    H is the hydraulic jump of the plant in question.

Thanks to this method it is also possible to build for each turbine in a given plant an index model that represents a complete mapping of the turbine and of the optimal values of the aforementioned angles identified in a time interval long enough to record the entire range of the hydraulic jumps. In other words, the above said index model of a Kaplan turbine is based on the carrying out of on line index tests by the method of the invention, in a time interval at least equal to or longer than the time required for an entire range of the operating hydraulic jumps that can be determined without any difficulties by any person with ordinary skills in this field according to the operating conditions of the plant.

In this case, the method described above carries out index tests automatically around pre-determined operative conditions of the turbine, which are for example the conditions indicated in the regulations governing the index tests for Kaplan turbines, for example regulation CEI EN 60041. Such mapping can also possibly be implemented on a turbine regulator already present in the plant, so as to automatically position the angles of the turbine at the optimal values indicated in the model for every given work condition. The system for controlling the regulator based on the present method detaches from the turbine at the moment when an external cause intervenes, which can for example be found among the following causes:

- stopping, snap or locking of the turbine;
- variation of the work conditions set by a station operator or by a remote control centre, in the case of operation at constant power and pondage installations;
- action of the regulator of flow rate or of level in the case of flowing water installations.

In the above said cases the present system disconnects immediately from the control of the turbine, returning it to the normal mode of control. If the cause is linked to an emergency condition that for example locks the turbine, safety procedures independent from the present system will also ensure that the generator is locked and made safe. If, on the other hand, the cause is a variation of the work conditions, the system can return to the optimisation procedure in the new changed work conditions.

With reference to the attached figure 2, where a flow diagram of the present method of construction of a continuous turbine model is represented, the optimised mapping of the efficiency around the maximum as a function of the opening angle of the distributor and inclination angle of the blades, of the parameters of hydraulic jump and power, as indicated above, is carried out as follows:

1. start from an initial guess value of the orientation angle of the blades, φ_guess, with fixed H and P;
2. determine the value of the other opening angle of the distributor a_guess as a function of the input values that maximise the efficiency so as to start the exploration of the 3D surface around the maximum efficiency;
3. from the values determined in point 1, start optimised scanning or mapping at α, based on the values of the efficiency gradient and restricting the range within 5% of the shift from the maximum value of efficiency detected, temporarily violating the restriction of keeping the power P constant.
4. start the optimised scanning (mapping) in the angle φ so as to always satisfy the restriction in constant power P, and the restriction on the minimum acceptable efficiency value. The optimised scanning procedure is based on a combined logic on the efficiency gradient and a "fuzzy" logic so as not to go into stagnation points. The scanning lock criteria are based either on reaching a maximum value of φ or on the lack of improvement in efficiency for a set number of iterations (scanned points).

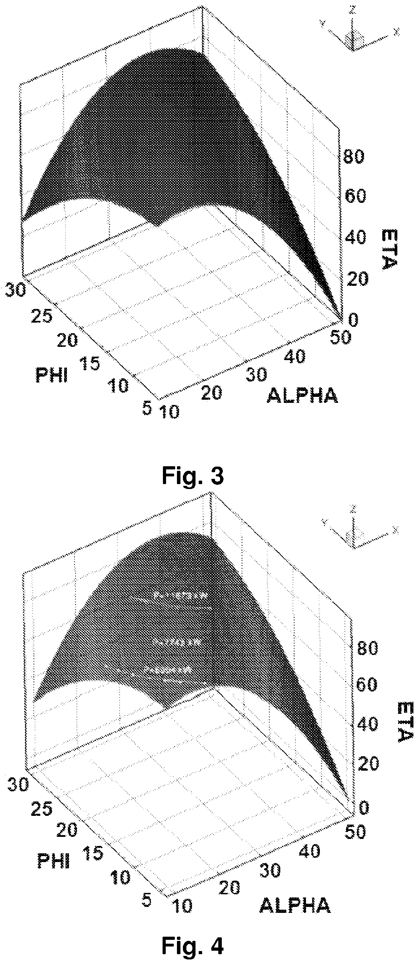

The steps described above generate a series of data containing, in the preferred scanning order, the data related to the angles and to the hydraulic jump, then the data related to the magnitude to be mapped, efficiency, power or flow rate. Such a dataset is then used to provide a continuous index model of the real operation of the Kaplan turbine. Figures 3 and 4 illustrate examples of a continuous model obtained with the method of the present invention for different sets of parameters. Figure 3 represents the performance curve obtained based on 314 work points scanned at a given value of the jump, whereas figure 4 shows the same continuous performance curve but highlighting three different paths at constant power that the angles φ and α followed to reach the point of maximum performance starting from a lower value.

A first advantage of the system and of the method according to the present invention is given by the possibility of carrying out the index tests for Kaplan turbines directly on line, without having to lock the plant for times that, especially in cases of hydroelectric power plants linked to bodies of water with seasonal variations, would be very long in order to be able to have the entire excursion of hydraulic jumps.

A further advantage is given by the fact that the procedure is completely automated thanks to the use of the sampling algorithm and to the automatic calculation procedures described above in detail. With respect to known methods for performing index tests for this type of turbine, which are manual and require the use of numerous resources, the present method is thus much simpler and more convenient, as well as involving lower costs. On the other hand, the system that allows the present method to be carried out also does not foresee the use of expensive technologies, and therefore it does not impact heavily on the total costs of the method of the invention, which has an undoubted economic advantage with respect to known methods.

The present invention has been described up to now with reference to a preferred embodiment. It should be understood that there can be other embodiments that derive from the same inventive core, as defined by the scope of protection of the claims given hereinafter.

**Claims**

1. A method for automatically determining an optimal position of the opening angle of a distributor (7) and of the orientation angle of blades (4) of a Kaplan turbine (1) in a hydroelectric power plant, to which position corresponds the maximum efficiency of the turbine, said method comprising the steps of:

i) monitoring the operations of said turbine by controlling the position of said opening angle of the distributor (7) and the position of said orientation angle of the blades of said turbine by means of a special regulator according to a 2D CAM or 3D CAM conjugation curve of said turbine;
ii) measuring one of the operative parameter of said turbine and identifying when said turbine operates in steady-state conditions **characterised by** values of said operative parameter that are within a pre-determined range for a pre-determined time;
iii) once said steady-state conditions are reached, arbitrarily varying the position of said opening angle of the distributor at a fixed position of said orientation angle of the blades (4) and measuring, for each value of said opening angle of the distributor, the values of the operative parameters of said turbine;

iv) calculating by an automatic calculation procedure the index values of efficiency for each set of values measured in step iii), and identifying, for each set of values of the operative parameters of the turbine, the values of said opening angles of the distributor (7) and of orientation of the blades (4) to which corresponds the maximum value of efficiency.

2. The method according to claim 1, wherein said operative parameter measured in step ii) is selected from the flow and the power of said turbine.

3. The method according to claim 1 or 2, wherein said step iii) is carried out in such a way that said index values of efficiency are comprised in a pre-determined range of values with the exclusion, from the determination of the optimal values of efficiency, of insignificant values or values potentially dangerous for said turbine corresponding to areas with phenomena of cavitation and strong vibrations, by continuous monitoring of said vibrations

4. The method according to claim 1, wherein in step iii) the measurement of the operative parameters values of the turbine for each value of the opening angle of the distributor (7) comprises sampling said measured values by means of a sampling algorithm that, when a pre-determined minimum number of sampled values is obtained, triggers said optimised automatic calculation procedure of step iv).

5. The method according to claim 1, wherein said optimised automatic calculation procedure of step iv) is selected from a method of multivariable polynomial regression of the second or third order and a function approximation method based on a neural network.

6. The method according to any one of the preceding claims, wherein said set of the turbine operative parameters in step iv) comprises the flow, the power and the hydraulic jump.

7. A method for constructing in a continuous manner an index numerical model of a Kaplan turbine (1) in a hydroelectric power plant around its pre-determined operating conditions by means of on line index tests according to the method as defined in claims 1-6, in a time interval long enough to record the entire range of hydraulic jumps in operation.

8. The method according to claim 7, wherein said pre-determined operative conditions are the conditions indicated in the regulations defining the index tests for the Kaplan turbines.

9. A system configured to carry out the method according to any of claims 1-6 for automatically determining the optimal position of the opening angle of the distributor (7) and of the orientation angle of the blades of a Kaplan turbine in a hydroelectric power plant, to which position corresponds the maximum efficiency of said turbine, said system comprising : means for controlling the opening angle of the distributor (7) and the orientation angle of the blades (4); means for measuring operative parameters of the turbine; means for processing data for automatically calculating the efficiency index values per set of operative parameters values of said turbine and for identifying, for each set of said values, the values of said opening angles of the distributors or of orientation of the blades (4) to which corresponds the maximum value of efficiency; and means for storing pre-determined data of said turbine and the data measured and calculated in said method.

**Patentansprüche**

1. Verfahren zum automatischen Bestimmen einer optimalen Position des Öffnungswinkels eines Verteilers (7) und des Orientierungswinkels von Schaufeln (4) einer Kaplan-Turbine (1) in einer hydroelektrischen Energieerzeugungsanlage, wobei der Position die maximale Effizienz der Turbine entspricht, wobei das Verfahren die Schritte enthält:

i) Überwachen der Operation der Turbine durch Steuern der Position des Öffnungswinkels des Verteilers (7) und der Position des Orientierungswinkels der Schaufeln (4) der Turbine mittels eines speziellen Regulators gemäß einer 2D CAM oder 3D CAM Konjugationskurve der Turbine;

ii) Messen eines der operativen Parameter der Turbine und Identifizieren, wenn die Turbine unter Dauerzustandsbedingungen arbeitet, die durch Werte der operativen Parameter charakterisiert sind die über eine vorbestimmte Zeit innerhalb eines vorbestimmten Bereiches sind;

iii) beliebiges Variieren der Position des Öffnungswinkels des Verteilers an einer festen Position des Orientierungswinkels der Schaufeln (4) und, für jeden Wert des Öffnungswinkels des Verteilers, Messen der Werte der operativen Parameter der Turbine, wenn einmal die Dauerzustandsbedingungen erreicht sind;

iv) Berechnen der Indexwerte von Effizienz für jeden Satz von Werten, die im Schritt iii) gemessen wurden, mit einer automatischen Berechnungsprozedur und Identifizieren der Werte der Öffnungswinkel des Verteilers (7) und der Orientierung der Schaufeln (4), denen der maximale Wert an Effizienz entspricht, für jeden Satz von Werten der operativen Parameter der Turbine.

2. Verfahren nach Anspruch 1, wobei der operative Parameter, der im Schritt ii) gemessen wird, ausgewählt ist aus der Strömung und der Leistung der Turbine.

3. Verfahren nach Anspruch 1 oder 2, wobei der Schritt iii) in einer solchen Weise ausgeführt wird, dass die Indexwerte der Effizienz in einem vorbestimmten Bereich von Werten enthalten sind, mit, von der Bestimmung der optimalen Werte der Effizienz, der Ausnahme von unbedeutenden Werten und Werten, die für die Turbine potenziell gefährlich sind, entsprechend Bereichen mit Phänomenen von Kavitation und starken Vibrationen, durch kontinuierliches Überwachen der Vibrationen.

4. Verfahren nach Anspruch 1, wobei im Schritt iii) die Messung der operativen Parameterwerte der Turbine für jeden Wert des Öffnungswinkels des Verteilers (7) das Sampeln der gemessenen Werte mittels eines Sampling-Algorithmus enthält, der, wenn eine vorbestimmte minimale Anzahl von Sampeln erhalten wurde, die optimierte automatische Berechnungsprozedur von Schritt iv) auslöst.

5. Verfahren nach Anspruch 1, wobei die optimierte automatische Berechnungsprozedur von Schritt iv) ausgewählt ist aus einem Verfahren von multivariabler polynomischer Regression der zweitem oder dritten Ordnung und einer Funktionsannäherungsmethode basierend auf einem neuronalen Netzwerk.

6. Verfahren nach einem der vorhergehenden Ansprüche, wobei der Satz der Parameter der operativen Turbine im Schritt iv) die Strömung, die Leistung und den Wechselsprung enthält.

7. Verfahren, um in einer kontinuierlichen Weise ein numerisches Index-Modell einer Kaplan-Turbine (1) in einer hydroelektrischen Energieerzeugungsanlage um ihre vorbestimmten Betriebsbedingungen herum zu konstruieren, mittels online Index-Tests gemäß dem Verfahren, wie es in den Ansprüchen 1 bis 6 definiert ist, in einem Zeitintervall, das lange genug ist, um den gesamten Bereich der Wechselsprünge im Betrieb aufzuzeichnen.

8. Verfahren nach Anspruch 7, wobei die vorbestimmten Betriebsbedingungen die Bedingungen sind, die in den Regeln angegeben sind, die die Index-Tests der Kaplan-Turbinen definieren.

9. System, das konfiguriert ist, um ein Verfahren nach einem der Ansprüchen 1 bis 6 auszuführen, zum automatischen Bestimmen der optimalen Position des Öffnungswinkels des Verteilers (7) und des Orientierungswinkels von Schaufeln der Kaplan-Turbine in einer hydroelektrischen Energieerzeugungsanlage, wobei der Position die maximale Effizienz der Turbine entspricht, wobei das System enthält: Einrichtungen zum Steuern des Öffnungswinkels des Verteilers (7) und des Orientierungswinkels der Schaufeln (4); Einrichtungen zum Messen der operativen Parameter der Turbine; Einrichtungen zum Verarbeiten von Daten zum automatischen Berechnen der Effizienz-Index-Werte pro Satz von Parameterwerten der operativen Turbine und, für jeden Satz der Werte, zum Identifizieren der Werte der Öffnungswinkel des Verteilers oder der Orientierung der Schaufeln (4), denen der Maximalwert der Effizienz entspricht; und Einrichtungen zum Speichern vorbestimmter Daten der Turbine und der Daten, die mit dem Verfahren gemessen und berechnet wurden.

**Revendications**

1. Un procédé pour déterminer automatiquement une position optimale de l'angle d'ouverture d'un distributeur (7) et de l'angle d'orientation des aubes (4) d'une turbine Kaplan dans une centrale hydroélectrique, à laquelle position correspond l'efficacité maximale de la turbine, ledit procédé comprenant les étapes consistant à :

   i) surveiller le fonctionnement de ladite turbine en commandant la position dudit angle d'ouverture du distributeur et la position dudit angle d'orientation des aubes de ladite turbine au moyen d'un régulateur spécial selon une courbe de conjugaison en CAM 2D ou CAM 3D de ladite turbine ;
   ii) mesurer l'un des paramètres de fonctionnement de ladite turbine et identifier le moment où ladite turbine fonctionne dans des conditions stables, **caractérisées par** des valeurs dudit paramètre de fonctionnement situées dans une plage prédéterminée pendant un temps prédéterminé ;
   iii) dès que lesdites conditions stables sont atteintes, faire varier arbitrairement la position du dit angle d'ouverture du distributeur pour une position fixe du dit angle d'orientation des aubes (4) et mesurer, pour chaque valeur du dit angle d'ouverture du distributeur, les valeurs des paramètres de fonctionnement de ladite turbine ;
   iv) calculer, à l'aide d'un processus de calcul automatique, les valeurs d'indice d'efficacité pour chaque ensemble de valeurs mesurées à l'étape iii), et identifier, pour chaque ensemble de valeurs de paramètres opérationnels de la turbine, les valeurs des dits angles d'ouverture du distributeur (7) et d'orientation des aubes (4) auxquelles correspond la valeur d'efficacité maximale.

2. Le procédé selon la revendication 1, dans lequel ledit paramètre opérationnel mesuré à l'étape ii) est sélectionné parmi le débit et la puissance de ladite turbine.

3. Le procédé selon l'une des revendications 1 et 2, dans lequel ladite étape iii) est effectuée de telle sorte que lesdites valeurs d'indice d'efficacité soient comprises dans une plage prédéterminée avec l'exclusion, à partir de la détermination des valeurs d'efficacité optimales, de valeurs non significatives ou de valeurs potentiellement dangereuses pour ladite turbine correspondant à des zones de phénomènes de cavitation et de fortes vibrations, en surveillant de façon continue lesdites vibrations.

4. Le procédé selon la revendication 1, dans lequel, à l'étape iii), la mesure des valeurs des paramètres opérationnels de la turbine pour chaque valeur de l'angle d'ouverture du distributeur (7) comprend l'échantillonnage desdites valeurs mesurées au moyen d'un algorithme d'échantillonnage qui, lorsqu'un nombre minimum prédéterminé de valeurs échantillonnées est obtenu, déclenche ladite procédure de calcul automatique optimisée de l'étape iv).

5. Le procédé selon la revendication 1, dans lequel ladite procédure de calcul automatique optimisée de l'étape iv) est sélectionnée parmi un procédé de régression polynomiale multivariable du deuxième ou du troisième ordre et un procédé d'approximation de fonction basé sur un réseau neuronal.

6. Le procédé selon l'une quelconque des revendications précédentes, dans lequel ledit ensemble des paramètres opérationnels de la turbine à l'étape iv) comprend l'écoulement, la puissance et le saut hydraulique.

7. Un procédé pour construire de façon continue un modèle numérique d'indices d'une turbine de Kaplan (1) dans une centrale hydroélectrique autour de ses conditions de fonctionnement prédéterminées au moyen d'essais d'indices en ligne selon le procédé tel que défini dans les revendications 1 à 6, dans un intervalle de temps assez long pour enregistrer toute la gamme de sauts hydrauliques lors du fonctionnement.

8. Le procédé selon la revendication 7, dans lequel lesdites conditions de fonctionnement prédéterminées sont les conditions indiquées dans les règlements définissant les tests d'indice pour les turbines Kaplan.

9. Un système configuré pour mettre en oeuvre le procédé selon l'une quelconque des revendications 1 à 6, pour déterminer automatiquement la position optimale de l'angle d'ouverture du distributeur (7) et de l'angle d'orientation des aubes d'une turbine Kaplan dans une centrale hydroélectrique, à laquelle position correspond l'efficacité maximale de ladite turbine, ledit système comprenant : des moyens pour commander l'angle d'ouverture du distributeur (7) et l'orientation de l'angle des aubes (4) ; des moyens pour mesurer des paramètres de fonctionnement de la turbine ; des moyens pour calculer automatiquement les valeurs d'indice d'efficacité par jeu de valeurs de paramètres de fonctionnement de ladite turbine et pour identifier, pour chaque jeu de dites valeurs, les valeurs des dits angles d'ouverture des distributeurs ou d'orientation des aubes (4) auxquelles correspond la valeur maximale d'efficacité ; et des moyens pour stocker des données prédéterminées de ladite turbine et les données mesurées et calculées avec ledit procédé.

**Fig. 1**

CONSTRUCTING CONTINUOUS MODEL OF THE KAPLAN TURBINE
BY USING POLYNOMIAL REGRESSION OR NEURAL NETWORK

OPTIMISED MAPPING OF EFFICIENCY AS FUNCTION OF ALPHA, PHI, WITH FIXED H AND P

DETERMINATION OF RESTRICTED GUESS VALUES

DETERMINATION OF ALPHA GUESS VALUE AT ETA MAX

OPTIMISED SCANNING AT ALPHA IN THE RANGE OF ETA MAX

OUTPUT MAPPING WITH INFO OF ETA, POWER AND FLOW RATE, F(ALPHA, PHI, H)

OPTIMISED SCANNING AT PHI, COMBINED LOGIC ON GRADIENT ETA, "FUZZY"

RECONSTRUCTING APPROXIMATED CONTINUOUS MODEL WITH INPUT DATA FROM MAPPING

**Fig. 2**

**Fig. 3**

**Fig. 4**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 4794544 A

**Non-patent literature cited in the description**

• Maximum power point tracking for micro hydro power plants using extremum seeking control. **ATTA K.T. et al.** IEEE Conference on Control Applications (CCA). IEEE, 2015, 1874-1879